(19) Europäisches Patentamt
European Patent Office
Office européen des brevets

(11) **EP 0 883 085 A1**

(12) **EUROPÄISCHE PATENTANMELDUNG**

(43) Veröffentlichungstag:
**09.12.1998 Patentblatt 1998/50**

(51) Int. Cl.$^6$: **G06K 19/16**, B42D 15/10

(21) Anmeldenummer: 97111432.7

(22) Anmeldetag: **07.07.1997**

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: **06.06.1997 CH 1368/97**

(71) Anmelder:
**Electrowatt Technology Innovation AG**
**6301 Zug (CH)**

(72) Erfinder:
• **Staub, René**
  **6330 Cham (CH)**
• **Tompkin, Wayne Robert**
  **5400 Baden (CH)**

(54)     **Diffraktives Flächenmuster**

(57)     Ein Flächenmuster (1) weist N visuell erkennbare Muster auf, die aus beugungsoptisch wirksamen, mikroskopisch feinen Reliefstrukturen, ebenen Spiegelflächen oder mit absorbierenden oder streuenden Strukturen zusammengesetzt sind. Die N Muster enthalten zusammen wenigstens ein unabhängiges, gemeinsames Flächenelement (11). Das Flächenelement (11) ist in Flächenteile unterteilt und weist eine von den N Mustern unabhängige, vorbestimmt strukturierte Anordnung der Flächenteile auf, die mit dem unbewaffneten Auge nicht erkennbar ist. Jedes Flächenteil ist mit einer einzigen, mikroskopisch feinen Beugungsstruktur oder mit einer Struktur belegt, die eine absorbierende oder streuende Eigenschaft besitzt oder ein ebener Spiegel ist. Die Reliefstrukturen, Beugungsstrukturen und die übrigen Strukturen sind in ein Laminat (20) aus Kunststoff eingebettet und können in ihrer optische Wirksamkeit durch eine Reflexionsschicht (21) verstärkt werden. Das Flächenmuster (1) ist als Sicherheitselement auf einem Dokument (2) angebracht und ermöglicht eine maschinelle Identifikation des Dokuments (2) in einem Lesegerät.

Fig. 1

EP 0 883 085 A1

**Beschreibung**

Die Erfindung bezieht sich auf Flächenmuster der im Oberbegriff des Anspruchs 1 genannten Art und auf die Verwendung dieses Flächenmusters.

Solche Flächenmuster eignen sich als Sicherheits - und Echtheitsmerkmal auf Dokumenten, wie zum Beispiel Banknoten, Wertpapiere, Ausweise, Pässe, Kredit - und andere Identitätskarten, "smart cards" in jeglicher Form usw.

Aus den Patentschritten EP-A 105'099, EP-A 330'738, EP-A 375'833 und EP-A 537'439 sind in Kunststoff eingeprägte, beugungsoptische Sicherheitsmerkmale mit N Mustern und äusserst feinen Filigran - Strukturen, wie z.B. Guillochen bekannt, deren Bildinhalt sich beim Drehen um eine Achse vorbestimmt verändert. Diesen Sicherheitsmerkmalen fehlt eine maschinell auslesbare Information.

Solche Sicherheitsmerkmale sind in ein Laminat aus Kunststoff eingebettet (EP-A 401'466).

Aus der CH-PS 653'160 ist ein Wertdokument mit maschinenlesbaren optischen Echtheitsmarkierungen bekannt. Das Dokument weist nur die aus Beugungsstrukturen bestehenden Echtheitsmarkierung auf die aus aneinander gefügten Teilflächen mit vorbestimmten Beugungsstrukturen zusammen gesetzt sind. Es wird vorgeschlagen, ein grobes Relief für eine Beugungsstruktur auf viele Flächenteile aufzuteilen. Durch Zerschneiden und wieder Zusammenfügen der Echtheitsmarkierung kann jedoch der Informationsgehalt leicht verfälscht werden. Ein wichtiges Merkmal ist das statische, gleichzeitige Erfassen der Information aus der ganzen Echtheitsmarkierung, falls die ganze Fläche des Echtheitsmerkmals mit parallelem Licht bestrahlt wird.

Das Sicherheitsmerkmal kann erste Beugungselemente aufweisen, die sich gemäss der EP-A 360'969 von den umgebenden weiteren Beugungselementen nur durch ihren um 180° höheren Wert des Azimuts (Asymmetrie) unterscheiden. Mit solchen spiegelsymmetrischen Paaren aus den Beugungselementen kann ein Echtheitsmerkmal mit einer Information versehen werden. Ein derartiges Flächenmuster weist den gleichen Nachteil wie die CH-PS 653'160 auf.

Die Aufgabe der Erfindung ist ein Flächenmuster in Form eines beugungsoptischen Sicherheitsmerkmal zu schaffen, das eine einfach auszulesende Information zur Identifizierung des Flächenmusters besitzt und nicht oder sehr schwierig verfälschbar ist.

Die genannte Aufgabe wird erfindungsgemäss durch die Merkmale des Anspruchs 1 gelöst. Eine Verwendung des Flächenmusters wird in Anspruch 12 angegeben. Vorteilhafte Ausgestaltungen ergeben sich aus den abhängigen Ansprüchen.

Nachfolgend werden Ausführungsbeispiele der Erfindung anhand der Figuren näher erläutert.

Es zeigt

Figur 1:       ein Flächenmuster,
Figur 2a - d:  Flächenelemente,
Figur 3:       ein Lesegerät mit dem Flächenmuster
Figur 4:       ein linearer Flächenverband,
Figur 5:       ein quadratisch begrenzter Flächenverband und
Figur 6:       eine Anordnung von Schriftbildern im Flächenmuster.

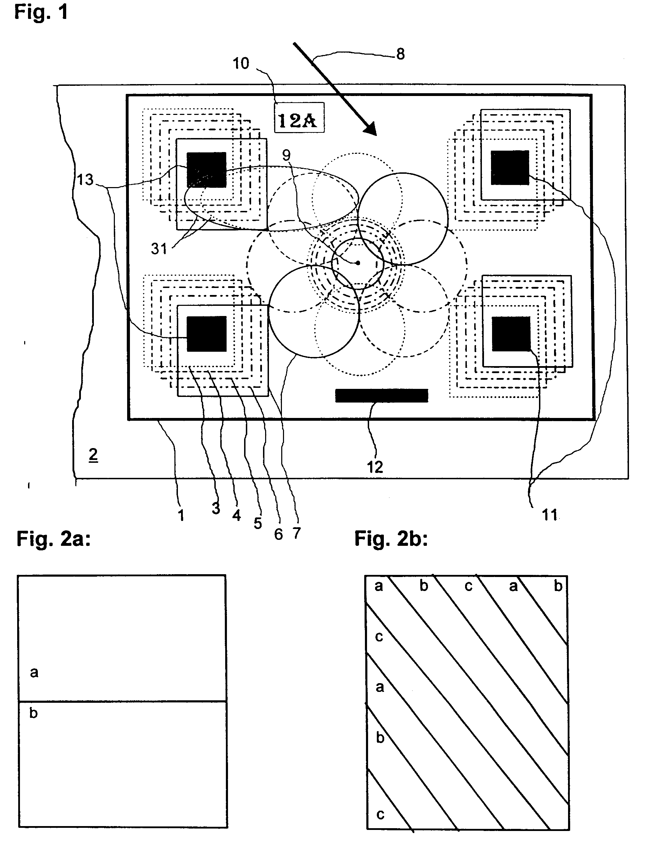

Die Figur 1 zeigt ein Flächenmuster 1, das als Sicherheitselement auf einem Dokument 2 angebracht ist. Das Flächenmuster 1 weist N visuell erkennbare Muster auf, die aus Flächenanteilen oder anderen graphischen Elementen mit beugungsoptisch wirksamen, mikroskopisch feinen Reliefstrukturen, ebenen Spiegelflächen oder mit absorbierenden oder streuenden Strukturen zusammengesetzt sind. N ist eine ganze Zahl > 0, für eindrucksvolle optische Bewegungseffekte wird N zwischen 6 und 30 gewählt. Ausführungen der N Muster sind in den eingangs erwähnten Patentschriften EP-A 105'099, EP-A 330'738, EP-A 375'833, EP-A 537'439 beschrieben. In der Zeichnung der Figur 1 sind aus zeichnerischen Erwägungen die N Muster durch Linien 3 bis 7 in verschiedener Gestalt (durch Punkte, Striche, Punkt - Strich usw.) dargestellt. In Wirklichkeit nimmt ein Beobachter, der das Flächenmuster 1 aus der Sehrichtung 8 erblickt, bei einer Drehung um die Normale zur Zeichenebene (dargestellt mit dem Punkt 9) des mit Tageslicht beleuchteten Flächenmusters 1, jeweils nur ein einziges der N Muster in brillanten Farben wahr, wobei sich in diesem Beispiel beim Uebergang von einem Muster zum nächsten die Lage der sichtbaren Quadrate und Kreise auf dem Flächenmuster 1 ändert bzw. Kreise mit dem Mittelpunkt 9 und sich ändernden Radien nacheinander sichtbar sind. Dieselben Bewegungseffekte weisen auch entsprechend gestaltete Schriftbilder 10 auf.

Die N Muster enthalten zusammen wenigstens ein unabhängiges, gemeinsames Flächenelement 11, das nicht Teil der N Muster ist. Eine Vielzahl dieser Flächenelemente 11 können nebeneinander, mit oder ohne Beabstandung, angeordnet sein und einen bandförmigen, linearen ersten Flächenverband 12 von der Höhe eines Flächenelementes 11 bilden. In einer andern Ausführung weist ein kompakter zweiter Flächenverband 13 die Form eines Vierecks (Quadrat, Rechteck, Rhombe) oder einer andem, beliebig begrenzten Flächenform auf. Nicht zusammenhängende, beliebig begrenzte Flächenelemente 11 können über das ganze Flächenmuster 1 verteilt oder in einer losen Gruppe angeord-

EP 0 883 085 A1

net sein.

In der Figur 2a bis 2d sind Beispiele der Flächenelemente 11 gezeigt, wobei hier angemerkt ist, dass die gezeigten Flächenelemente 11 nur aus darstellerischen Gründen als Rechtecke gezeichnet sind. Das Flächenelement 11 ist in Flächenteile 14, 15 unterteilt und weist eine von den N Mustern unabhängige, vorbestimmt strukturierte Anordnung der Flächenteile 14, 15 auf, die mit dem unbewaffneten Auge nicht erkennbar ist, d.h. wenigstens eine Abmessung der Flächenteile 14, 15 ist kleiner als 0,3 bis 0,4 mm. Jedes Flächenteil 14 bzw. 15 ist mit einer einzigen, mikroskopisch feinen Beugungsstruktur oder mit einer Struktur belegt, die eine absorbierende oder streuende Eigenschaften besitzt, oder ein ebener Spiegel ist. Nachstehend werden die nicht näher spezifizierten Strukturen der Flächenteile 14, 15 mit "Teilstruktur" bezeichnet. Das Flächenmuster 11 in Figur 2a ist in zwei gleich grosse Flächenteile 14, 15 unterteilt. Das Flächenteil 14 ist mit der Teilstruktur "a" belegt, der Flächenteil 15 mit der Teilstruktur "b". Die Grösse des Flächenelementes 11 ist beispielsweise 0,5 mm breit und 0,6 bis 0,8 mm hoch. Für den Betrachter des Flächenmusters 1 (Figur 1) sind diese Flächenteile 14, 15, wenn sie mit einer Beugungsstruktur belegt sind, wegen der hohen Intensität des an der Beugungsstruktur gebeugten Lichtes als auffällige Farbflecken sichtbar und könnten den Bildeindruck des jeweils sichtbaren Musters stören. Beschädigungen der Oberfläche des Flächenelementes 1 innerhalb des Flächenteils 14 bzw. 15 kann die Leuchtkraft der Teilstruktur empfindlich reduzieren.

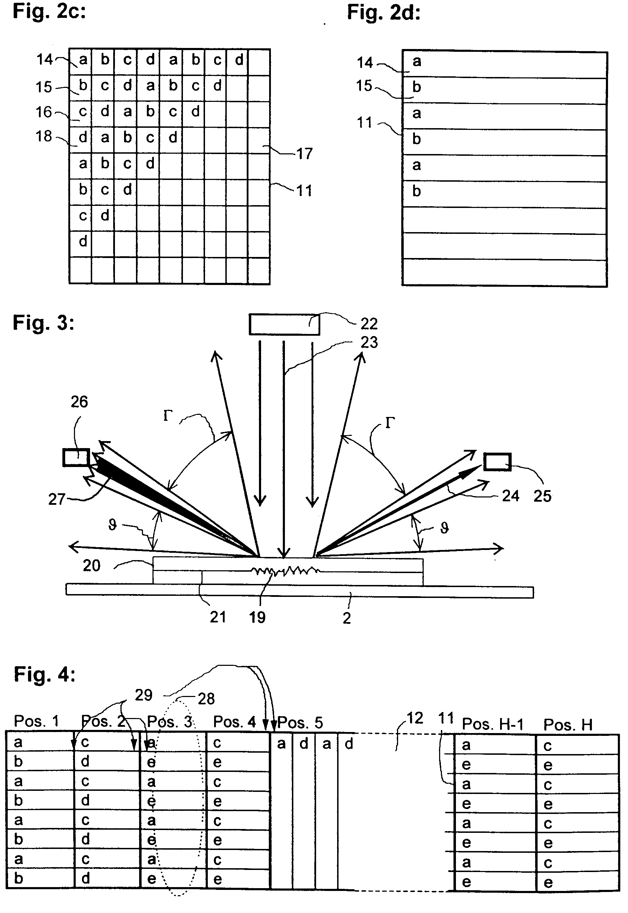

Werden die Flächenelemente 11 feiner unterteilt, z.B. gemäss den Figuren 2b, 2c, 2d, nimmt für den Betrachter die Intensität des Flächenelementes 11 ab. In der Figur 2b ist das Flächenelement 11 mit einer Anordnung der schräg gestellten bandförmigen Flächenteile 14, 15, 16 unterteilt. Die Teilstrukturen "a", "b" und "c" sind den Flächenteilen 14, 15, 16 zugeordnet und bilden eine zyklisch wechselnde Folge abc abc abc. Die kleinere Abmessung der einzelnen Flächenteile 14, 15, 16 liegt im Bereich von 50 $\mu$m. Sind die Teilstrukturen "a", "b" und "c" als Beugungsstrukturen ausgebildet, unterscheiden sie sich in wenigstens einem Gitterparameter, so dass der Beobachter meist eine Mischfarbe mit weniger Brillianz erblickt. In der Figur 2c ist das Flächenelement 11 in regelmässige Pixel 17 unterteilt, deren grösste Abmessung 0,3 mm nicht überschreitet. Diese Anordnung der zyklisch vertauschten Teilstrukturen "a", "b", "c" und "d" in den Flächenteilen 14, 15, 16, 18 ist eine Abwandlung der Anordnung in der Figur 2b, die besser in die eines der bekannten Flächenmuster (EP-A 375'833) integrierbar ist. Die Figur 2d weist eine Anordnung der bandförmigen, wenigstens 30 $\mu$m breiten Flächenteile 14, 15 mit den beiden zyklisch vertauschten Teilstrukturen "a" und "b" auf. Die hier gezeigten Beispiele der Anordnung der Teilstrukturen im Flächenelement 11 und die Art der Unterteilung des Flächenelementes 11 sind eine nicht vollständige Auswahl.

In der Figur 3 ist das Flächenmuster 1 (Figur 1) auf das Dokument 2 geklebt. Ein Relief 19 des Flächenmusters 1 umfasst die Flächenanteile mit den mikroskopisch feinen Reliefstrukturen und mit absorbierenden oder streuenden Strukturen oder mit ebenen Spiegeln der N Muster sowie die Teilstrukturen der Flächenelemente 11. Das Relief 19 ist in ein Laminat 20 aus transparentem Kunststoff eingebettet. Zu Erhöhung der optischen Wirksamkeit kann das Relief 19 mit einer Reflexionsschicht 21 verstärkt werden.

Eine maschinelle Identifikation des Dokuments 2 in einem Lesegerät, das die CH - Anmeldung mit gleicher Priorität und Erfinder wie die vorliegende Anmeldung beschreibt, ist besonders bei Banknoten und Ausweisen aller Art vorteilhaft. Um ein sicheres optisch maschinelles Auslesen zu ermöglichen, weisen die Beugungsstrukturen der Flächenelemente 11 (Figur 1) und der aus diesen zusammengesetzten Flächenverbänden 12 (Figur 1), 13 (Figur 1) wenigstens eine Spatialfrequenz $f_B$ auf, die nicht in den mikroskopisch feinen Reliefstrukturen der N Muster verwendet wird oder ein ganzzahliges Vielfaches der für die Reliefstrukturen verwendeten Spatialfrequenzen $f_R$ ist, also gilt Spatialfrequenz $f_B \neq m \cdot f_R$ für m = 1, 2, 3, ... ;die Zahl m ist die Ordnungszahl des Beugungseffekts. Wird im Lesegerät gebeugtes Licht der k-ten Beugungsordnung erfasst, so wird die Selektion der Spatialfrequenz $f_B$ weiter eingeschränkt, da auch für diese k-te Beugungsordnung die Ausschliessregel $k \cdot f_B \neq m \cdot f_R$ für m = 1, 2, 3, ... und k = 1, 2, ... gelten muss. Die Spatialfrequenzen $f_B$ und $f_R$ sind aus dem Bereich 0 bis etwa 3500 Linien/mm, d.h. von einem ebenen Spiegel bis zu Gitterstrukturen, die gerade noch in den Kunststoff des Laminats 20 abgeformt werden können.

Es ist denkbar, neben den getrennten Spatialfrequenzen $f_B$ und $f_R$ auch getrennte Azimutbereiche $\varphi_B$, $\varphi_R$ für die Beugungsstrukturen der Flächenelemente 11 und die Reliefstrukturen der N Muster vorzusehen.

Im Lesegerät erzeugt eine Lichtquelle 22 monochromatisches Licht 23 mit einer vorbestimmten Wellenlänge $\lambda$ aus dem infraroten oder sichtbaren Bereich des Spektrums der elektromagnetischen Wellen. Das auf das Flächenmuster 1 einfallende Licht 23 wird an den vielen Flächenteilen 14 (Figur 2), 15 (Figur 2), 16 (Figur 2), 18 (Figur 2) mit den Beugungsstrukturen der Spatialfrequenz $f_B$ gebeugt; in diesem Beispiel in der ersten Beugungsordnung (m = 1). In der Figur 3 gibt ein Pfeil 24 die Richtung des an den Beugungsstrukturen gebeugten Lichts der Wellenlänge $\lambda$ an. Die Beugungsstrukturen der Flächenteile 14, 15, 16, 18 können sich durch den Azimut $\varphi$ (0° $\leq \varphi < $ 360°) und das Profil der Beugungsstruktur (symmetrische und asymmetrische Gitter, Sinus -, Rechteck -, Dreieck -, Sägezahnprofil mit $(f_B)^{-1} \leq 3 \cdot \lambda$ oder $(f_B)^{-1} > 3 \cdot \lambda$) unterscheiden. Das an den Flächenteilen 14, 15, 16, 18 mit dem gleichen Azimut $\varphi$ der Beugungsstruktur gebeugte Licht wird symmetrisch zum einfallenden Licht 23 abgelenkt und fällt auf die Photodetektoren 25, 26. Das einfallende Licht 23 und die beiden, symmetrisch zum einfallenden Licht 23 angeordneten Photodetektoren 25, 26 legen eine Beugungsebene 100 mit dem Azimut $\Theta$, der zu detektierenden Flächenteilen 14, 15, 16, 18 fest, welche gleichzeitig die Zeichenebene in der Figur 3 ist.

3

Die Reliefstrukturen der N Muster besitzen andere Spatialfrequenzen und für jedes Muster einen anderen Azimut, so dass das an den N Mustern gebeugte einfallende Licht 23 in andere durch Kegelflächen begrenzte Winkelbereiche $\Gamma$, $\vartheta$ gelenkt wird und die Photodetektoren 25, 26 nicht erreicht. Diese Kegelflächen besitzen als gemeinsame Achse die Richtung der nullten Beugungsordnung; in der Zeichnung der Figur 3 ist diese Achse antiparallel zum einfallenden Licht 23.

Das Lesegerät in der oben genannten CH - Anmeldung kann für den gleichen Azimut $\Theta$ ($0° \leq \Theta < 180°$) der Beugungsebene 100, der eine Teilstruktur zugeordnet ist, wenigstens drei Zustände des gebeugten Lichts unterscheiden, nämlich gebeugt am symmetrischen Gitter oder an einem der beiden asymmetrischen Gittern mit den Azimuten $\varphi$ und $\varphi + 180°$. Weist hingegen die Teilstruktur eine absorbierende oder streuende Eigenschaft auf oder ist sie ein ebener Spiegel, ergibt sich ein weiterer vom Lesegerät erkennbarer Zustand "keine Beugungsstruktur". Somit bestimmen die Flächenteile 14, 15, 16, 18 mit der gleichen Teilstruktur wenigstens vier Zustände. Enthält beispielsweise das Flächenelement 11 Flächenteile 14, 15 mit zwei verschiedene Teilstrukturen "a" "b" (Figuren 2a, 2d), sind mit dem Flächenelement 11, das als Informationselement dient, 16 verschiedene Zustände darstellbar. Beizufügen ist, dass in diesem Fall im Lesegerät je zwei Photodetektoren 25, 26 in den beiden Beugungsebenen 100 entsprechend den Parametern der beiden Teilstrukturen "a" und "b" anzuordnen sind. Mit den Informationselementen kann die Identität des Flächenmusters 1 eines Dokuments 2 verschlüsselt werden und mit dem Lesegerät sicher erkannt werden. Ist in einem Flächenelement 11, mit T die Anzahl der in den Flächenteilen 14, 15, 16, 18 verwendeten unterschiedlichen Teilstrukturen bezeichnet, die Z Zustände definieren, weist das Flächenelement 11 als Informationselement E verschiedene Zustände auf, wobei $E = Z^T$ ist. Umfasst der Flächenverband 12 (Figur 1) bzw. 13 (Figur 1) mehrere Flächenelemente 11, z.B. die Anzahl F, sind $E^F$ verschiedene Zustände der Information für eine optisch maschinell auslesbare Kodierung des Flächenmusters 1 theoretisch nutzbar.

Das von den Photodetektoren 25, 26 empfangene Licht hängt unter anderem von der Gesamtfläche der Flächenteile 14 bzw. 15 usw. mit der gleichen Teilstruktur innerhalb des Flächenelements 11 ab. In einem Beispiel gemäss Figur 2d betrug die Abmessung des Flächenelements 11 mit zwei Teilstrukturen in der Breite 0,5 mm und in der Höhe 1,2 mm oder für die Gesamtfläche jeder Teilstruktur 0,30 mm$^2$. Die Teilstruktur war in der Höhe in 50 $\mu$m hohe Flächenteile 14, 15 eingeteilt. Dies ergab 12 Flächenteile 14 mit der Teilstruktur "a" und gleich viele Flächenteile 15 mit der Teilstruktur "b". Der Vorteil dieser Anordnung liegt in der praktisch unmöglichen mechanischen Trennung der Flächenteile 14 und 15 und verhindert daher ein in betrügerischer Absicht aus Schnipseln neu gestaltete Zusammenstellung eines Flächenelements 11.

Wie aus der Figur 3 ersichtlich, weist die in der Teilstruktur verwendete Spatialfrequenz $f_B$ zu den Spatialfrequenzen $f_R$ der Reliefstrukturen wenigstens einen minimalen Spatialfrequenzabstand $\Delta f$ auf dargestellt durch den Pfeil 24 in der Lücke zwischen den beiden begrenzenden Kegelflächen der beiden Winkelbereiche $\Gamma$, $\vartheta$. Der Spatialfrequenzabstand $\Delta f$ beträgt bei einer typischen Spatialfrequenz $f_B$, $f_R$ von 500 bis 1000 Linien/mm etwa $\Delta f = 20$ bis 100 Linien/mm.

Ist das Dokument 2 ein dünnes Papier, z.B. wie bei Banknoten, folgt das Laminat 20 der rauhen und oft auch zerknitterten Papieroberfläche. Das Licht 23 fällt dann lokal nicht mehr senkrecht auf das Flächenmuster 1 ein, und die Richtung des Pfeils 24 weicht von der Sollrichtung ab und kann möglicherweise nicht mehr den Photodetektor 25 bzw. 26 erreichen. Um diese Effekte zu kompensieren, weist die Spatialfrequenz $f_B$ der Beugungsstruktur innerhalb des Flächenteils 14, 15, 16 bzw. 18 eine Modulation auf, d.h. die Spatialfrequenz $f_B$ weist keinen Einzelwert auf sondern variiert innerhalb enger Grenzwerte kontinuierlich oder stufenweise, beispielsweise zwischen 500 Linien/mm und 520 Linien/mm bei einer Nominalfrequenz von $f_B = 510$ Linien/mm. Das gebeugte Licht ist nicht mehr parallel sondern leicht divergent, wie dies der schattierte Bereich 27 andeutet. Damit das von den Photodetektoren 25, 26 empfangene gebeugte Licht sicher von den Teilstrukturen stammt, muss für alle Spatialfrequenzen $f_B$ des Modulationsbereichs (Bandbreite) die Ausschliessregel $k \cdot f_B \neq m \cdot f_R$ gelten.

In der Figur 4 ist eine Ausführung des linearen Flächenverbands 12 dargestellt. In einem Beispiel ist der lineare Flächenverband 12 eine Folge der H aneinander gereihter Flächenelemente 11. Sie weisen die in der Figur 2d gezeigte Anordnung der Flächenteile 14, 15 oder eine um 90° gedrehte Anordnung (Pos. 5) auf. Die in der Figur 4 verwendeten Parameter der Teilstrukturen a bis e sind in der Tabelle 1 aufgeführt. Die Teilstrukturen "a" und "c" teilen die Flächenelemente 11 als in gerade und ungerade Positionen eingereihte ein. Die Teilstrukturen "d" und "e" stellen die Information "logisch 0" und "logisch 1" dar. Das Bezeichnen der Flächenelemente 11 mit ihrer Position im Flächenverband 12 weist den Vorteil auf, das weitgehend eine Verfälschung der im Flächenverband 12 enthaltenen Information durch Zerschneiden des Flächenverbands 12 und erneutes Zusammensetzen verhindert.

Tabelle 1

| Teilstruktur | a | b | c | d | e |
|---|---|---|---|---|---|
| Spatialfrequenz $f_B$ | 1000 pro mm | Spiegelebene | 1000 pro mm | 600 pro mm | 600 pro mm |

Tabelle 1 (fortgesetzt)

| Teilstruktur | a | b | c | d | e |
|---|---|---|---|---|---|
| Azimut $\varphi$ | 180° | --- | 0° | 180° | 0° |
| Funktion | ungerades Bit | Startzeichen | gerades Bit | logisch 0 | logisch 1 |

Der Flächenverband 12 muss mit einem sequentiell ablesenden Lesegerät optisch abgetastet werden, da die Information auch im Stellenwert der Flächenelemente 11 steckt, d.h. in ihrer Position in Bezug auf das Startzeichen (Pos. H=1). Das Lesegerät in der Zeichnung der Figur 3 benötigt nur eine einzige Beugungsebene 100, in der symmetrisch zum einfallenden Licht 23 zwei Paare der Photodetektoren 25, 26 angeordnet sind. Das an den beiden Teilstrukturen mit den Spatialfrequenzen 600 Linien/mm und 1000 Linien/mm gebeugte Licht unterteilt den für das gebeugte Licht der N Muster verfügbare Halbraum in drei Bereiche und nicht in zwei, wie gezeichnet.

Das einfallende Licht 23 wird mit einem Kollimator (EP-A 360'969) so verformt, dass gemäss der Figur 4 auf dem Flächenelement 11 beispielsweise eine beleuchtete Fläche 28 entsteht, deren Abmessung längs des Flächenverbands 12 wenigstens 50 % der Breite eines Flächenelements 11 beträgt. Zum Auslesen wird das einfallende Licht 23 längs des linearen Flächenverbands 12 so geführt, dass ein Flächenelement 11 nach dem andern ausgelesen wird. Das Startzeichen ermöglicht die eindeutige Zuordnung der Informationselemente 29 im Flächenverband 12. Der lineare Flächenverband 12 enthält in diesem Beispiel die Information "Start/010 ... 11". Zusätzlich kann die Pos. H als Stopzeichen ausgestaltet werden, wobei im die Teilstrukturen "b" und "c" dem Lesegerät das Stopzeichen eindeutig signalisieren.

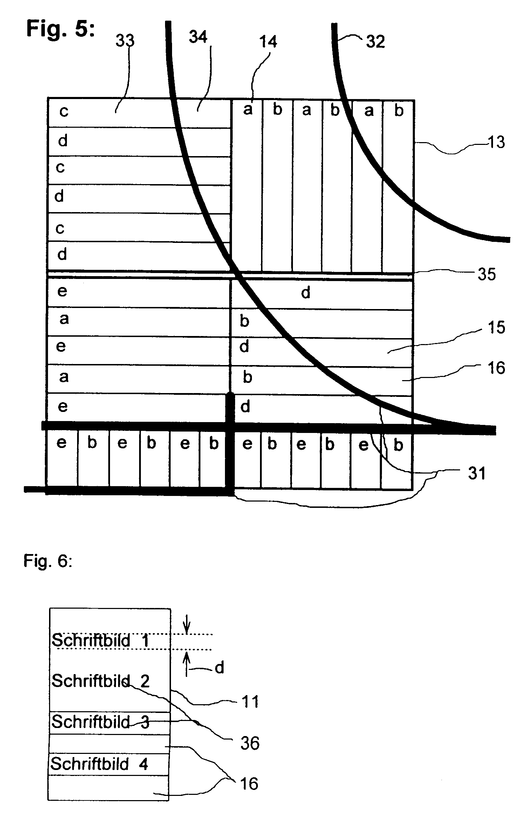

Der kompakte zweite Flächenverband 13 (Figur 1) ist in der Figur 5 beispielhaft gezeigt. Der Flächenverband 13 setzt sich hier aus sechs Flächenelementen 11 (Figur 2d) zusammen, die mit den Anordnungen der Flächenteile 14 (Figur 2d), 15 (Figur 2d) unterteilt sind, wobei die fünf Teilstrukturen in den Flächenelementen 11 zu {a, b}, {a, c}, {a, e}, {b, e} und {c, d} kombiniert sind. Jede Teilstruktur legt einen von wenigstens von vier Zuständen fest. Wenn der ganze Flächenverband 13 gleichzeitig beleuchtet ist, erkennt ein Lesegerät mit drei Beugungsebenen 100 (Figur 3) und mit fünf Paaren der Photodetektoren 25 (Figur 3), 26 (Figur 3) den durch die gewählten Teilstrukturen vorbestimmten Zustand aus $4^5$ = 1024 Zuständen. Die Tabelle 2 enthält Parameter für einen vorbestimmten Zustand als Beispiel.

Ohne von der erfinderischen Idee abzuweichen, können sich graphische Linienelemente 31, 32 der N Muster über die Fläche der Flächenelemente 11 erstrecken und es in die beiden Unterelemente 33 und 34 zerschneiden. Die Zugehörigkeit zum Flächenelement 11 ist durch die Anordnung der Teilstrukturen bestimmt. Aneinandergrenzende Flächenelemente können auch mittels eines Leerstreifens 35 beabstandet sein. Solche Linienelemente 31, 32 sind meist äusserst schmal (typ. 30 bis 100 μm) und stören daher das Auslesen der Flächenelemente 11 oder, wie die Figur 1 zeigt, der Flächenverbände 12, 13 nicht.

Tabelle 2

| Teilstrukturen | a | b | c | d | e |
|---|---|---|---|---|---|
| Azimutwinkel der Beugungsebene | 0° | 90° | 0° | 90° | 135° |
| Azimutwinkel $\varphi$ | 180° | 270° | 0° | --- | 135° |
| Beugungsgitter | asymmetrisch | asymmetrisch | symmetrisch | Spiegel | asymmetrisch |
| Spatialfrequenz $f_B$ | 600 pro mm | 600 pro mm | 900 pro mm | 900 pro mm | 900 pro mm |

Anstelle einfacher kreisringförmiger oder bandförmiger Streifen kann, wie in der Figur 6 gezeigt ist, für die Flächenteile 14, 15, 16, 17, 18 mit Vorteil auch ein Schriftbild 36 aus alphanumerischen Zeichen gewählt werden. Solche Schriftbilder 36 mit einer Höhe d ≤ 0,3 mm sind in der EP-A 330'738 beschrieben. Die alphanumerischen Zeichen des Schriftbildes 36 können beispielsweise die Teilstruktur "a" aufweisen und der Hintergrund der Zeichen die Teilstruktur "b". In einer anderen Ausführung sind benachbarte Schriftbilder 36 und ihr Hintergrund durch die Teilfläche 16 mit einer dritten Teilstruktur "c" getrennt.

Die wichtigsten Vorteile der hier vorgestellten Kodierung mittels eines Flächenverbands 12, 13 oder einem einzigen Flächenelement 11 sind hier nochmals zusammengefasst:

- Kratzer, Dreck, Oberflächenfehler usw. machen sich kaum noch bemerkbar, da sich die informationstragenden Teilstrukturen, ohne auffällig zu wirken, über ein grösseres Flächenelement 11 verteilen.
- Die Information ist ausschliesslich mit vorbestimmten Spatialfrequenzen $f_B$ kodiert, so dass der Leser die Information auch aus dem Flächenmuster 1 problemlos auslesen kann.

- Grosse Toleranz gegen Positionierungsfehler des Flächenmusters 1 relativ zum Lesegerät.

**Patentansprüche**

1. Flächenmuster mit N visuell erkennbaren Mustern aus Flächenanteilen mit beugungsoptisch wirksamen, mikroskopisch feinen Reliefstrukturen, ebenen Spiegelflächen oder mit absorbierenden oder streuenden Strukturen, deren optische Wirksamkeit durch eine Reflexionsschicht (21) auf den Strukturen (19) bestimmt ist und die in ein Laminat (20) aus Kunststoff eingebettet sind,
dadurch gekennzeichnet,

dass das die N Muster zusammen wenigstens ein unabhängiges, gemeinsames Flächenelement (11) aufweisen,
dass das gemeinsame Flächenelement (11) so in Flächenteile (14; 15; 16; 17; 18) unterteilt ist, dass eine von den N Mustern unabhängige, vorbestimmt strukturierte Anordnung der Flächenteile (14; 15; 16; 17; 18) mit dem unbewaffneten Auge nicht erkennbar ist,
dass jedes der Flächenteile (14; 15; 16; 17; 18) eine einzige, mikroskopisch feine Beugungsstruktur oder eine Struktur mit absorbierenden oder streuenden Eigenschaften enthält oder ein ebener Spiegel ist.

2. Flächenmuster nach Anspruch 1, dadurch gekennzeichnet, dass das gemeinsame Flächenelement (11) ein optisch maschinell auslesbares Informationselement ist.

3. Flächenmuster nach Anspruch 2, dadurch gekennzeichnet, dass in den N Mustern mehrere Flächenelemente (11) eine gemeinsamen Gruppe bilden und dass die Informationselemente der Gruppe einen optisch maschinell auslesbaren Kode bilden.

4. Flächenmuster nach Anspruch 3, dadurch gekennzeichnet, dass die Flächenelemente (11) gleich gross und linear angeordnet sind.

5. Flächenmuster nach einem der Ansprüche 2 bis 4, dadurch gekennzeichnet, dass die mikroskopisch feinen Beugungsstrukturen der Flächenteile (14; 15; 16; 17; 18) im gemeinsamen Flächenelement (11) wenigstens eine Spatialfrequenz $f_B$ und die beugungsoptisch wirksamen, mikroskopisch feinen Reliefstrukturen der N Muster Spatialfrequenzen $f_R$ aufweisen, wobei keine ganzahlige Vielfache der Spatialfrequenzen $f_B$ ein ganzahliges Vielfaches der Spatialfrequenzen $f_R$ ist.

6. Flächenmuster nach Anspruch 5, dadurch gekennzeichnet, dass jede der in den Beugungsstrukturen verwendeten Spatialfrequenzen $f_B$ zu den Spatialfrequenzen $f_R$ der Reliefstrukturen wenigstens einen minimalen Spatialfrequenzabstand $\Delta f$ aufweist.

7. Flächenmuster nach einem der vorhergehenden Ansprüche, dadurch gekennzeichnet, dass die Spatialfrequenz $f_B$ der Beugungsstruktur innerhalb des Flächenteils (14 bzw. 15 bzw. 16 bzw. 17 bzw. 18) eine vorbestimmte Bandbreite aufweist.

8. Flächenmuster nach einem der vorhergehenden Ansprüche, dadurch gekennzeichnet, dass das Flächenelement (11) durch eine Vielzahl der Flächenteile (14; 15; 16; 17; 18) in Pixel (17) oder Bänder (14; 15; 16; 18) unterteilt ist, wobei Teilstrukturen (a; b; c; d) in den Pixeln (17) oder Bändern (14; 15; 16; 18) zyklisch vertauscht sind.

9. Flächenmuster nach Anspruch 8, dadurch gekennzeichnet, dass das Flächenelement (11) in den Flächenteilen (14; 15) nur zwei verschiedene Teilstrukturen (a, b; c, d; a, e; c, e) aufweisen.

10. Flächenmuster nach einem der vorhergehenden Ansprüche, dadurch gekennzeichnet, dass wenigstens eines der Flächenteile (14; 15; 16; 17; 18) ein alphanumerisches Zeichen oder ein Schriftband ist.

11. Flächenmuster nach einem der vorhergehenden Ansprüche, dadurch gekennzeichnet, dass sich wenigstens ein graphisches Element (31; 32) von wenigstens einem der N Muster über ein Flächenelement (11) erstreckt und es in Unterelemente (33; 34) teilt.

12. Verwendung eines Flächenmusters nach einem der vorhergehenden Ansprüche als Sicherheitselement für ein Dokument (2) und zur Identifikation des Dokuments (2) in einem Lesegerät.

EP 0 883 085 A1

**Fig. 1**

**Fig. 2a:**

**Fig. 2b:**

8

**Fig. 2c:**

| | | | | | | | | |
|---|---|---|---|---|---|---|---|---|
| a | b | c | d | a | b | c | d | |
| b | c | d | a | b | c | d | | |
| c | d | a | b | c | d | | | |
| d | a | b | c | d | | | | |
| a | b | c | d | | | | | |
| b | c | d | | | | | | |
| c | d | | | | | | | |
| d | | | | | | | | |
| | | | | | | | | |

14, 15, 16, 18, 17, 11

**Fig. 2d:**

| |
|---|
| a |
| b |
| a |
| b |
| a |
| b |
| |
| |
| |

14, 15, 11

**Fig. 3:**

**Fig. 4:**

| Pos. 1 | Pos. 2 | Pos. 3 | Pos. 4 | Pos. 5 | | | | | Pos. H-1 | Pos. H |
|---|---|---|---|---|---|---|---|---|---|---|
| a | c | a | c | a | d | a | d | | a | c |
| b | d | e | e | | | | | | e | e |
| a | c | a | c | | | | | | a | c |
| b | d | e | e | | | | | | e | e |
| a | c | a | c | | | | | | a | c |
| b | d | e | e | | | | | | e | e |
| a | c | a | c | | | | | | a | c |
| b | d | e | e | | | | | | e | e |

29, 28, 12, 11

9

**Fig. 5:**

**Fig. 6:**

Europäisches
Patentamt

**EUROPÄISCHER RECHERCHENBERICHT**

Nummer der Anmeldung

EP 97 11 1432

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | EP 0 375 833 A (LANDIS & GYR BETRIEBS AG) 4. Juli 1990 * Spalte 2, Zeile 31 – Spalte 8, Zeile 40; Abbildungen 1,2 * | 1,10-12 | G06K19/16 B42D15/10 |
| A | WO 92 04692 A (AMBLEHURST LTD) 19. März 1992 * Seite 2, Zeile 15 – Seite 3, Zeile 22; Abbildungen 2,3 * | 1,5,12 | |
| A,D | EP 0 401 466 A (LANDIS & GYR BETRIEBS AG) 12. Dezember 1990 * Zusammenfassung; Abbildung 1 * | 1 | |
| A | WO 95 04948 A (COMMONWEALTH SCIENTIFIC AND INDUSTRIAL RESEARCH ORG.) 16. Februar 1995 * Seite 2 – Seite 4; Abbildungen 1-11 * | 1 | |
| A | US 5 379 131 A (YAMAZAKI SATOSHI) 3. Januar 1995 * Spalte 6, Zeile 30 – Spalte 8, Zeile 11; Abbildungen 1,4,6,7 * | 1-3 | RECHERCHIERTE SACHGEBIETE (Int.Cl.6) G06K B42D G02B |

Der vorliegende Recherchenbericht wurde für alle Patentansprüche erstellt

| Recherchenort | Abschlußdatum der Recherche | Prüfer |
|---|---|---|
| BERLIN | 17. September 1998 | von Moers, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................................

& : Mitglied der gleichen Patentfamilie, übereinstimmendes Dokument

EPO FORM 1503 03.82 (P04C03)